# EUROPEAN PATENT SPECIFICATION

(11) **EP 2 461 625 B1**
(45) Date of publication and mention of the grant of the patent: **11.09.2013**
(21) Application number: 10803883.7
(22) Date of filing: 15.07.2010
(51) Int. Cl.: H04W 36/08

(54) **METHOD, DEVICE AND SYSTEM FOR SWITCH CONTROL**
VERFAHREN, VORRICHTUNG UND SYSTEM ZUR UMSCHALTSTEUERUNG
PROCÉDÉ, DISPOSITIF ET SYSTÈME DE COMMANDE DE COMMUTATION

(30) Priority: 29.07.2009 CN 200910055821
(43) Date of publication of application: 06.06.2012
(73) Proprietor: Huawei Technologies Co., Ltd., Guangdong 518129 (CN)
(72) Inventor: ZHU, Wei, Shenzhen, Guangdong 518129 (CN)
(74) Representative: Pfenning, Meinig & Partner GbR
(86) International application number: PCT/CN2010/075182
(87) International publication number: WO 2011/012050

(56) References cited:
- EP-A1- 1 638 261
- EP-A1- 1 796 407
- CN-A- 1 960 565
- CN-A- 1 997 204
- CN-A- 101 291 529
- RAJEEV KOODLI CHARLES E PERKINS COMMUNICATION SYSTEMS LABORATORY NOKIA RESEARCH CENTER: "A Context Transfer Framework for Seamless Mobility; draft-koodli-seamoby-ctv6-02.txt", 20011120, no. 2, 20 November 2001 (2001-11-20), XP015031160, ISSN: 0000-0004

## Description

### FIELD OF THE INVENTION

The present invention relates to the field of communications technologies, and in particular, to a handover control method, apparatus, and system.

### BACKGROUND OF THE INVENTION

Femtocell (Femtocell, also referred to as home NodeB or 3G access point) technology is a solution for expanding indoor coverage for mobile communications, which can transfer a voice and data call sent by a user equipment (User Equipment, UE) to the 3rd generation (The 3rd Generation, 3G) core network based on a standard interface. A home access point (Access point, AP) thereof is plug-and-play, and may be connected to any IP-based transport network.

3G works at a frequency band of 2GHz, and has a poor radio transmission property and especially a poor building penetration property, causing the decrease of the indoor quality of service. The appearance of the Femtocell may effectively improve the indoor coverage range and quality of service.

Under femto (femto) architecture defined by the 3GPP R8, handover of a user equipment from AP to AP is not supported at present. As the coverage range of the AP is small, a handover process of the user equipment from one AP to another AP is frequent. If the handover from AP to AP can be implemented with reference to a handover procedure from an access point to a macro network, the handover control needs to be completed by a core network (Core Network, CN) node, which brings about an effect of high load to a core network device.

EP1638261 discloses handover from 3GPP to WLAN, where a tunnel is preconfigured.

### SUMMARY OF THE INVENTION

Embodiments of the present invention provide a handover control method, apparatus, and system, so as to lower the load of a core network.

A handover control method provided in an embodiment of the present invention includes:
receiving, by an access gateway, a handover request message sent by a source access point of a user equipment, where the handover request message includes an identifier of a target access point; and
controlling, by the access gateway according to a pre-acquired handover control parameter, the handover of the user equipment from the source access point to the target access point.

A handover control apparatus provided in an embodiment of the present invention, where the apparatus is an access gateway, includes:
a handover request receiving unit, configured to receive a handover request message sent by a source access point of a user equipment, where the handover request message includes an identifier of a target access point; and
a handover control unit, configured to control, according to a pre-acquired handover control parameter, the handover of the user equipment from the source access point to the target access point.

A handover control system provided in an embodiment of the present invention includes a handover control apparatus, and a source access point and a target access point which communicate with the handover control apparatus.

In the embodiment of the present invention, the access gateway controls, according to the pre-acquired handover control parameter, the handover of the user equipment from the source access point to the target access point. Through the implementation of the handover control by the access gateway, the load of a core network device may be lowered, so that the system operates more steadily, signaling exchanges between the access gateway and a core network is decreased, and the bandwidth is saved.

### BRIEF DESCRIPTION OF THE DRAWINGS

FIG. 1 is a flow chart of a handover control method according to Embodiment 1 of the present invention;
FIG. 2 is a flow chart of acquiring, by an access gateway, a security mode parameter in a process that a core network initiates a security mode according to an embodiment of the present invention;
FIG. 3 is a flow chart of acquiring, by an access gateway, a RAB parameter in a RAB assignment process according to an embodiment of the present invention;
FIG. 4 is a flow chart of a handover control method according to Embodiment 2 of the present invention;
FIG. 5 is a signaling flow chart of an application example according to Embodiment 2 of the present invention;
FIG. 6 is a signaling flow chart of modifying a service bearer on a core network side according to an embodiment of the present invention;
FIG. 7 shows a procedure for releasing a service that is not supported by a target access point according to an embodiment of the present invention;
FIG. 8 is a schematic structural diagram of a handover control apparatus according to Embodiment 3 of the present invention; and
FIG. 9 is a schematic structural diagram of a handover control apparatus according to Embodiment 4 of the present invention.

### DETAILED DESCRIPTION OF THE EMBODIMENTS

The handover control method, apparatus, and system provided in embodiments of the present invention are described in detail below respectively.

It should be noted that in embodiments of the present invention, descriptions are made mainly with a wideband code division multiple access (Wideband Code Division Multiple Access, WCDMA for short) system as an example. However, it can be understood that in other systems, for example, in Global System For Mobile Communications (Global System For Mobile Communications, GSM for short), time division-synchronous code division multiple access (Time Division-Synchronous Code Division Multiple Access, TD-SCDMA for short), code division multiple access CDMA2000, worldwide interoperability for microwave access (Worldwide Interoperability for Microwave Access, WIMAX for short), and Long Term Evolution (Long Term Evolution, LTE for short) systems, the solutions provided in the embodiments of the present invention can also be used.

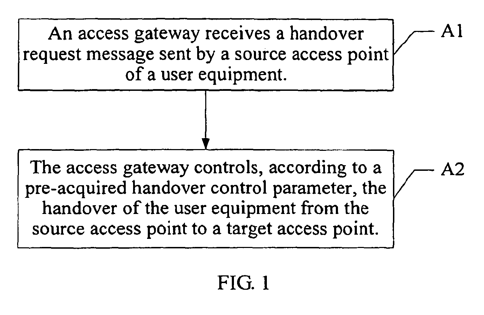

Embodiment 1: A handover control method, a procedure of which is as shown in FIG. 1, includes:
A1: An access gateway (Access Gateway, AG) receives a handover request message sent by a source access point of a user equipment, where the handover request message includes an identifier of a target access point.
A2: The access gateway controls, according to a pre-acquired handover control parameter, the handover of the user equipment from the source access point to the target access point.

In the embodiment of the present invention, the access gateway pre-acquires the handover control parameter, and controls, according to the handover control parameter, the handover of the user equipment from the source access point to the target access point. Through the implementation of the handover control by the access gateway, the load of a core network device may be lowered, so that the system operates more steadily, signaling exchanges between the access gateway and a core network is decreased, and the bandwidth is saved.

It can be understood that the solution in the embodiment of the present invention may further include judging whether the target access point is in a management range of the access gateway; and if the target access point is not in a management range of the access gateway, sending the handover request message to the core network, and performing, by the core network, the handover control.

It can be understood that the access gateway records access points managed by the access gateway so as to achieve data forwarding, and a specific recording manner may be implemented in a manner of saving an identifier list or a routing list of the access points managed by the access gateway. Therefore, when receiving the handover request message carrying the identifier of the target access point from the user equipment, the access gateway may determine, according to the identifier of the target access point, whether the target access point is in the management range of the access gateway.

Hereinafter, a process of acquiring the handover control parameter in the embodiment of the present invention is described in detail. The handover control parameter in the embodiment of the present invention may include a security mode parameter of the user equipment and a RAB parameter of the user equipment. It can be understood that the handover control parameter may further include other parameter that have been owned by the access gateway in the prior art or parameter that may be acquired by the access gateway through an existing technology. The acquired handover control parameter that is emphasized in the embodiment of present invention is that has not been acquired by the access gateway in the prior art and needs to be used in the handover control process.

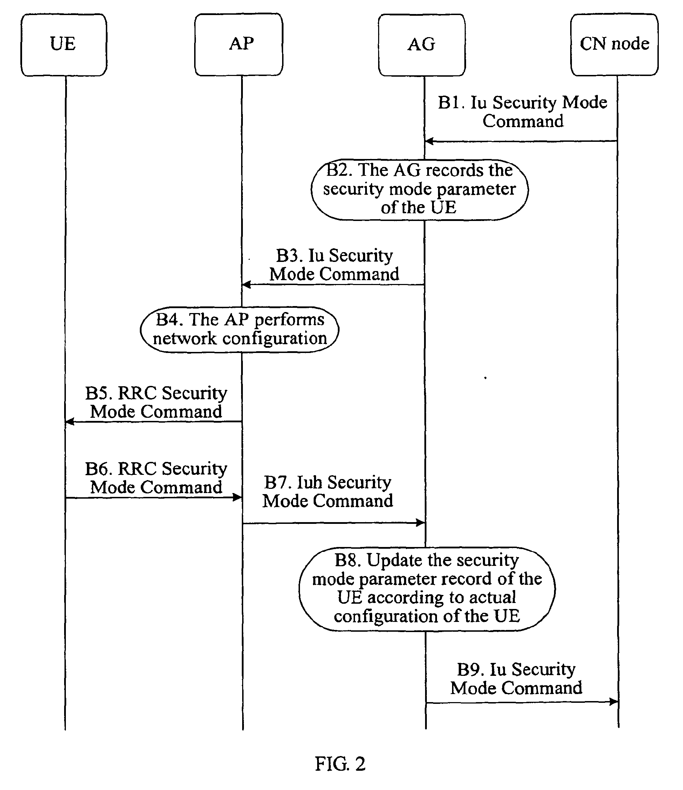

The acquiring the security mode parameter of the user equipment may be acquiring, by the access gateway, in a process the core network initiates a security mode. A specific procedure is as shown in FIG. 2, and includes:
B1: A core network (CN) node sends a security mode command message (Security Mode Command) of an Iu interface (an interface between RNC/AG and CN) to the AG, where the message includes a security mode parameter.

In this embodiment, the core network node may be a mobile switching center (Mobile Switching Center, MSC), a serving GPRS support node (Serving GPRS Support Node, SGSN), or a core network device having a similar network control function.

In this embodiment, the security mode parameter may be an information element "Integrity Protection Information (Integrity Protection Information)" and an information element "Encryption Information (Encryption Information)". The definitions of the two information elements in the Radio Access Network Application Protocol (Radio Access Network Application Protocol, RANAP) are as shown in Table 1.

| **Table 1** | | |
|---|---|---|
| Name of Information Element | Optional/Mandatory | Definition Section in TS25.413 |
| **Integrity Protection Information** | **M (Mandatory)** | **9.2.1.11** |
| **Encryption Information** | **O (Optional)** | **9.2.1.12** |

B2: The AG saves the security mode parameter in Table 1 after receiving the security mode command message from the CN node.

B3: The AG sends a security mode command message (Security Mode Command) of an Iuh interface (an interface between the AP and the AG) to the AP, where RANAP content in the message is from the security mode command message of the Iu interface in step B1.

B4: The AP performs network configuration according to the content in the security mode command message.

In the embodiment, a process of performing, by the AP, the network configuration may be implemented by adopting an existing conventional manner, which is not repeated herein again.

B5: The AP sends a radio resource control (Radio Resource Control, RRC) security mode command message (Security Mode Command) to the UE.

B6: The UE performs local configuration according to RRC security mode command message, and after the configuration is completed, sends a RRC security mode complete message (Security Mode Complete) to the AP.

B7: The AP sends a security mode complete message (Security Mode Complete) of the Iuh interface to the AG.

In the embodiment of the present invention, the security mode complete message may include information elements (IEs) "Chosen Integrity Protection Algorithm" (Chosen Integrity Protection Algorithm) and "Chosen Encryption Algorithm" (Chosen Encryption Algorithm). The definitions of the two information elements in the RANAP protocol are as shown in Table 2.

| **Table 2** | | |
|---|---|---|
| Name of Information Element | Optional/Mandatory | Definition Section in TS25.413 |
| **Chosen Integrity Protection Algorithm** | **M (Mandatory)** | **9.2.1.13** |
| **Chosen Encryption Algorithm** | **O (Optional)** | **9.2.1.14** |

The content of the two information elements "Chosen Integrity Protection Algorithm" (Chosen Integrity Protection Algorithm) and "Chosen Encryption Algorithm" (Chosen Encryption Algorithm) is results of choosing a security mode, by the UE and the AP, according to the security mode parameter delivered by the core network.

It can be understood that through step B1 to step B7, the negotiation for the security mode parameter between the core network and an access network (the UE and the access point) is implemented, and the UE returns the security mode parameter (see Table 2) supported (or chosen) by the UE according to the security mode parameter (see Table 1) delivered by the core network.

B8: After receiving the security mode complete message from the AP, the AG updates the saved security mode parameter delivered by the core network, according to the security mode parameter chosen by the AP and the UE. The parameter needed to be saved is as shown in Table 2.

B9: The AG sends a security mode complete message (Security Mode Complete) of the Iu interface to the core network (CN), where the content of the message is the same as that of the security mode complete message in step B7.

The saved security mode parameter is used by the AG in an AP-AP handover process described below.

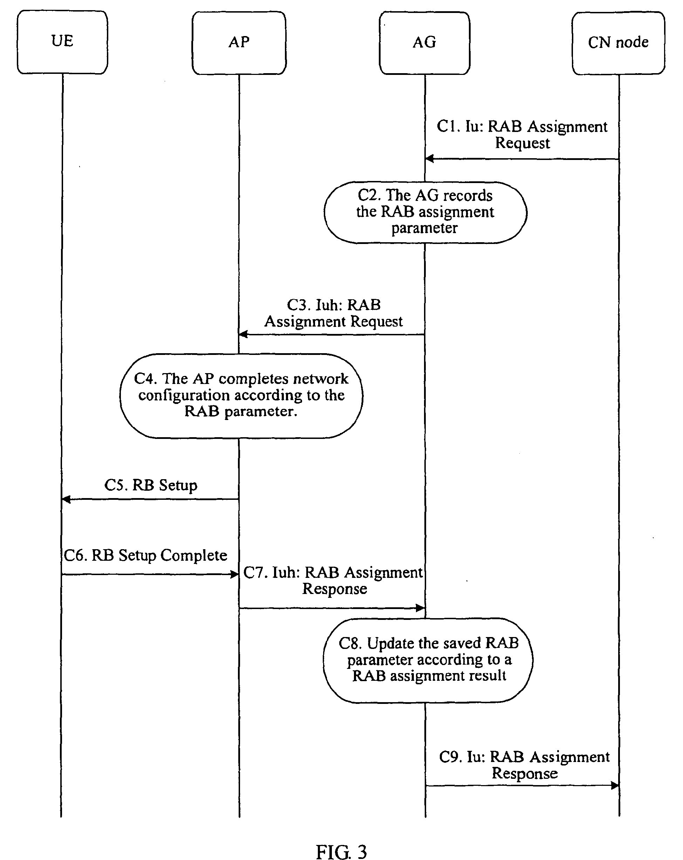

Based on an existing 3GPP process, when a user uses a service, assignment of a radio access bearer (Radio Access Bear, RAB) is performed first. In an embodiment of the present invention, the RAB parameter of the user equipment may be acquired in a RAB assignment process initiated by a core network. As shown in FIG. 3, the RAB assignment process is as follows.

C1: The core network (CN) sends a RAB assignment request message (RAB Assignment Request) of the Iu interface to the AG, where the message includes a RAB parameter.

In this embodiment, the RAB parameter is represented by an information element RABs To Be Setup Or Modified List (RABs To Be Setup Or Modified List), and parameters in the information element are used to configure parameters, such as a user plane address and a service rate, in setting up a service bearer. The definitions of the information element RABs To Be Setup Or Modified List in the RANAP protocol are as shown in Table 3.

| **Table 3** | | |
|---|---|---|
| Name of Information Element | Optional/Mandatory | Definition Section in TS25.413 |
| **RABs To Be Setup Or Modified List** | **O (Optional)** | |
| **>RABs To Be Setup Or Modified Item IEs** | | |
| **>>First Setup Or Modify Item** | **M (Mandatory)** | |
| **>>>RAB ID** | **M (Mandatory)** | **9.2.1.2** |
| >>>NAS Synchronisation Indicator | O (Optional) | 9.2.3.18 |
| >>>RAB Parameters | O (Optional) | 9.2.1.3 |
| **>>>User Plane Information** | **O (Optional)** | |
| >>>>User Plane Mode | M (Mandatory) | 9.2.1.18 |
| >>>>UP Mode Versions | M (Mandatory) | 9.2.1.19 |
| **>>>>Transport Layer Information** | **O (Optional)** | |
| >>>>Transport Layer Address | M (Mandatory) | 9.2.2.1 |
| >>>>Iu Transport Association | M (Mandatory) | 9.2.2.2 |
| >>>Service Handover | O (Optional) | 9.2.1.41 |
| **>>Second Setup Or Modify Item** | **M (Mandatory)** | |
| >>> PDP Type Information | O (Optional) | 9.2.1.40 |
| >>>Data Volume Reporting Indication. | O (Optional) | 9.2.1.17 |
| >>>Alternative RAB Parameter Values | O (Optional) | 9.2.1.43 |
| >>>GERAN BSC Container | O (Optional) | 9.2.1.58 |

C2: After receiving the RAB assignment request message, the AG records the RAB parameter, and the recorded parameter is as shown in Table 3.

C3: The AG sends a RAB assignment request message (RAB Assignment Request) of the Iuh interface to the AP.

RANAP content in the message is from the RAB assignment request message of the Iu interface in step C1.

C4: The AP completes network configuration according to the RAB parameters.

C5: The AP sends a RB setup message (RB Setup) to the UE.

C6: The UE sends a RB setup complete message (RB Setup Complete) to the AP.

C7: The AP sends a RAB assignment response message (RAB Assignment Response) of the Iuh interface to the AG.

The RAB assignment response message includes an information element (IE) "RABs Setup Or Modified List" (RABs Setup Or Modified List), and the definitions of the information element in the RANAP protocol is as shown in Table 4 below.

| **Table 4** | | |
|---|---|---|
| Name of Information Element | Optional/Mandatory | Definition Section in TS25.413 |
| **RABs Setup Or Modified List** | **O (Optional)** | |
| **>RABs Setup Or Modified Item IEs** | | |
| **>>RAB ID** | **M (Mandatory)** | **9.2.1.2** |
| **>>Assigned RAB Parameter Values** | **O (Optional)** | **9.2.1.44** |

It can be understood that through step C1 to step C7, the negotiation for the RAB parameter between the core network and the access network (the UE and the access point) is implemented, and the UE retunes the chosen RAB parameter (see Table 4) according to the RAB parameter (see Table 3) delivered by the core network.

C8: When receiving the RAB assignment response message from the AP, the AG update the recorded RAB parameter according to the RAB parameter which is chosen by the user equipment and returned by the AP. The RAB parameter required to be recorded is as shown in Table 4.

C9: The AG sends a RAB assignment response message (RAB Assignment Response) of the Iu interface to the core network (CN), where the content of the message is the same as that of the RAB assignment response message in step C7.

The RAB parameter saved by the AG is used by the AG in the AP-AP handover process described subsequently.

In the embodiment of the present invention, the handover control parameter is acquired though the foregoing security mode process and RAB assignment process, so that the acquisition procedure of the handover control parameter is simple and easy to use. However, the method for acquiring the handover control parameter is not unique, and it can be understood that the handover control parameter needed by the AG may also be delivered by the core network to the AG. A specific delivery manner may be implemented by using a existing message or a newly added message, as long as the format of the delivered message meets the interface specification between the core network and the AG, which does not constitute a limitation to the present invention.

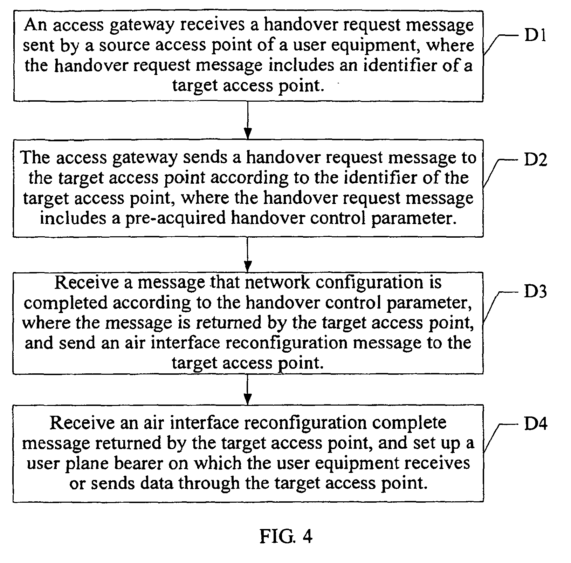

Embodiment 2: A handover control method, a flow chart of which is as shown in FIG. 4, includes:
D1: An access gateway receives a handover request message sent by a source access point of a user equipment, where the handover request message includes an identifier of a target access point.
D2: The access gateway sends a handover request message to the target access point according to the identifier of the target access point, where the handover request message includes a pre-acquired handover control parameter.
D3: Receive a message returned by the target access point that network configuration is completed according to the handover control parameter, and send an air interface reconfiguration message to the target access point.
D4: Receive an air interface reconfiguration complete message returned by the target access point, and set up a user plane bearer on which the user equipment receives or sends data through the target access point.

A specific process of setting up the user plane bearer includes: creating, by the AG, a user plane bearer to the target AP, detaching a user plane bearer to AP1, and connecting a user plane bearer of an Iu interface with a user plane bearer of an Iuh interface.

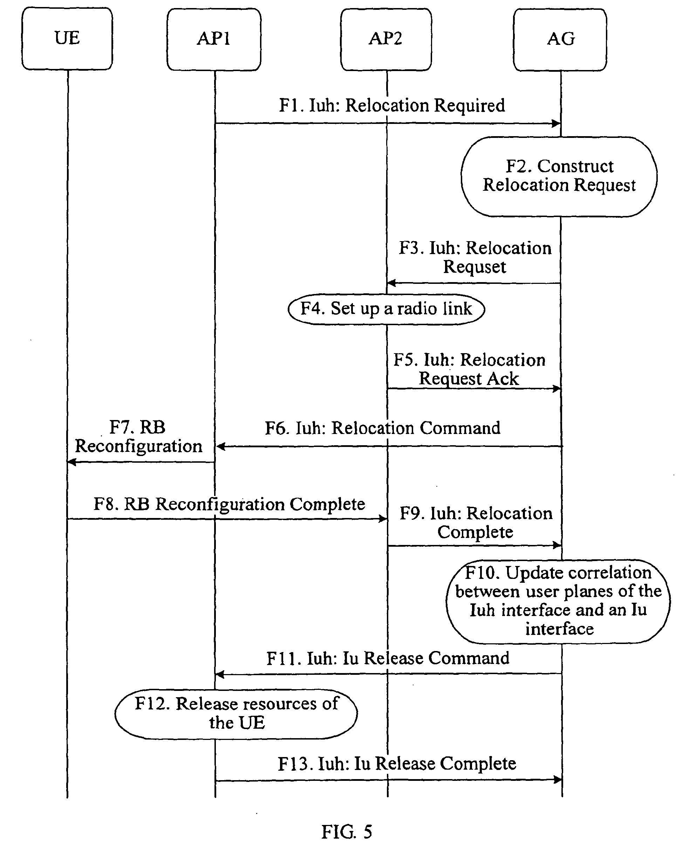

For an application example which is applied to the 3GPP protocol according to Embodiment 2 of the present invention, a signaling flow chart is as shown in FIG. 5, in which the source access point is AP1, and the target access point is AP2. The procedure includes:
F1: The source AP (AP1 in the figure) sends a relocation required message (Relocation Required) of an Iuh interface to the AG, where the message includes radio configuration information of a setup service of the UE.
F2: After receiving the Relocation Required message, the AG constructs a relocation request message (Relocation Request) of the Iuh interface.

Part of information elements (IEs) in the Relocation Request message may be acquired from the Relocation Required message, and the rest may be supplemented by the AG according to a previously saved RAB parameter and security mode parameter of the UE. Message information elements required to be supplemented are as shown in "bold" front in Table 5.

| **Table 5** | | |
|---|---|---|
| Name of Information Element | Optional/ Mandatory | Data Source |
| Permanent NAS UE Identity | O | Admittance List of AG |
| Cause | M | Fill in Relocation Triggered (6) or Relocation desirable for radio reasons (43) |
| CN Domain Indicator | M | Fill in according to a CN domain in which the relocation required message lies |
| Source RNC To Target RNC Transparent Container | M | Acquire from the relocation required message |
| **RABs To Be Setup List** | **O** | |
| **>RABs To Be Setup Item IEs** | | |
| **>>RAB ID** | **M** | **RAB setup information saved by the AG** |
| **>>NAS Synchronisation Indicator** | **O** | **RAB setup information saved by the AG** |
| **>>RAB Parameters** | **M** | **RAB setup information saved by the AG, plus an information element in an updated RAB response message** |
| **>>Data Volume Reporting Indication** | **C - ifPS** | **RAB setup information saved by the AG** |
| **>>PDP Type Information** | **C - ifPS** | **RAB setup information saved by the AG** |
| **>>User Plane Information** | **M** | |
| **>>User Plane Mode** | **M** | **RAB setup information saved by the AG** |
| **>>>UP Mode Versions** | **M** | **RAB setup information saved by the AG** |
| **>>Transport Layer Address** | **M** | **Fill in according to a user plane of the AG** |
| **>>Iu Transport Association** | **M** | **Fill in according to a user plane of the AG** |
| **>>Service Handover** | **O** | **RAB setup information saved by the AG** |
| **>> Alternative RAB Parameter Values** | **O** | **Not filled in** |
| **>>GERAN BSC Container** | **O** | **RAB setup information saved by the AG** |
| **Integrity Protection Information** | **O** | **Security mode information saved by the AG** |
| **Encryption Information** | **O** | **Security mode information saved by the AG** |
| Iu Signalling Connection Identifier | M | The identifier is managed and allocated by the AG |
| Global CN-ID | O | Not filled in |
| SNA Access Information | O | Not filled in |
| UESBI-Iu | O | Not filled in |

In Table 5, the column "name of information element" is the part which needs to be filled in by the AG in the relocation request message, and the column "data source" is information source of the information elements filled by the AG "O" indicates an optional information element, "M" indicates a mandatory information element, and "C-ifPS" indicates a mandatory information element of a packet switched (PS) domain. In the table, the "bold" front indicates parameters acquired by the AG in a security mode process and a RAB assignment process, and parameters in normal front are parameters that may be acquired by the AG in the prior art.

F3: After completing filling in the relocation request message, the AG sends the relocation request message (Relocation Request) of the Iuh interface to the target AP (AP2 in the figure).

F4: The target AP sets up a radio link according to the parameters in the relocation request message.

F5: The target AP sends a relocation request ack message (Relocation Request Ack) to the AG

F6: After receiving the relocation request ack message of the target AP, the AG fills in a relocation command message (Relocation Command), and sends the relocation command message to the source AP.

Information in the relocation command message may be found in both the relocation request ack message and information of the AG.

F7: The source AP sends an air interface reconfiguration message to the UE, where the air interface reconfiguration message is acquired from the relocation command message.

In this embodiment, the illustration is made with a RB reconfiguration message (RB Reconfiguration) as an example.

F8: After the UE completes the configuration on a UE side according to the air interface reconfiguration message, the UE sends an air interface reconfiguration complete message to the target AP.

In this embodiment, the description is made with a RB reconfiguration complete message (RB Reconfiguration Complete) as an example.

F9: The target AP sends a relocation complete message (Relocation Complete) to the AG

F10: The AG updates user plane correlation between the Iuh interface and an Iu interface.

When the AG receives the relocation complete message sent by the target AP, it is indicated that the UE has been handed over to the target AP, and uplink and downlink services can be normally performed. The AG needs to update the user plane correlation between the Iu interface and the Iuh interface, to correlates the user plane of the Iu interface and the created AG-target AP (corresponding to the Iuh interface) user plane. After the correlation is updated, downlink user data from a CN node is sent from the AG-target AP user plane to the target AP, and uplink user data from the target AP is sent from the user plane of the Iu interface to the CN, thereby restoring a path of the user planes.

F11: The AG sends a release command (Release Command) to the AP1.

F12: The AP1 releases resources of the UE.

F13: The AP1 returns a release complete (Release Complete) response to the AG.

When the UE releases a RAB service that has been set up, the AG needs to delete corresponding RAB information, so as to keep a consistency with actual UE services. A RAB delete process also employs the RAB assignment procedure, which is similar to the foregoing RAB setup process, and includes updating RAB information according to a delete result in a RAB assignment response message.

When the UE changes a RAB service that has been set up, the AG needs to update corresponding RAB information, a procedure of which is similar to that for setting up a RAB.

In the embodiment of the present invention, after the target access point receives the handover request message, a case may occur that the target access point does not support the capability of the source access point. If the case occurs, handover may be implemented by adopting the following two manners.

Manner 1: The target access point sets up, according to the capability of the target access point, a service bearer supported by the target access point, and after the handover is successful, the target access point initiates modification of the service bearer on a core network side, or releases a service that is not supported by the target access point. It can be understood that in practical application, the manner of modifying the service bearer may be preferably chosen, and if the capability of the target access point cannot implement the modification of the service bearer, the manner of releasing the service that is not supported is adopted to complete the handover.

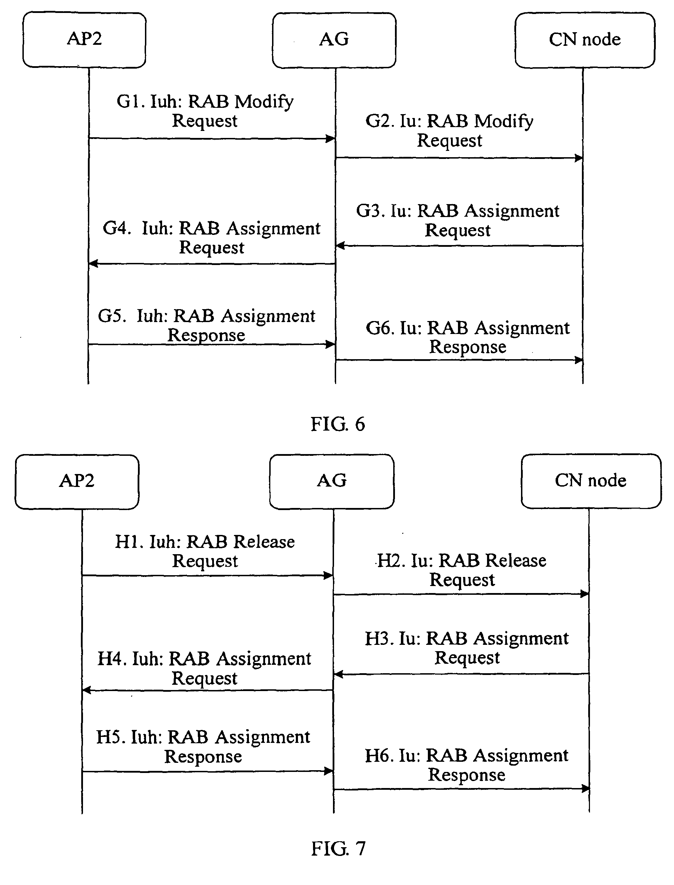

In this embodiment, the target AP receives the relocation request message (Relocation Request) of the Iuh interface, if a service bearer requirement, for example, rate requirement, in the relocation request cannot be met, the target AP may set up a RAB bearer according to the rate capability of the target AP first, and records a state that "the AP service bearer does not agree with the CN request". After the target AP (AP2) sends the relocation complete message (Relocation Complete) of the Iuh interface to the AG, the target AP judges whether the state record of the target AP is that "the AP service bearer does not agree with the CN request", and if the state record of the target AP is that "the AP service bearer does not agree with the CN request", the target AP initiates a RAB renegotiation process to implement the modification of the service bearer. A process of modifying the service bearer on the core network side is as shown in FIG. 6, and includes:
G1 : The target AP (AP2) sends a RAB modify request message (RAB modify Request) of the Iuh interface to the AG
G2: AG sends a RAB modify request message (RAB modify Request) of the Iu interface to a core network (CN) node.
G3: The core network (CN) node sends a RAB assignment request message of the Iu interface to the AG, where the message carries a new RAB parameter, for example, rate.
G4: The AG sends a RAB assignment request message (RAB Assignment Request) of the Iuh interface to the target AP.
G5: The target AP completes the reconfiguration according to the new RAB parameter, and sends a RAB assignment response message (RAB Assignment Response) of the Iuh interface to the AG.
G6: The AG sends a RAB assignment response message (RAB Assignment Response) of the Iu interface to the core network (CN) node.

So far, the modification of the service bearer is completed.

In this embodiment, a process of releasing a service that is not supported by the target access point is as shown in FIG. 7, and includes:
H1: The target AP (AP2) sends a RAB release request message (RAB Release Request) of the Iuh interface to the AG
H2: The AG sends a RAB release request message (RAB Release Request) of the Iu interface to a core network (CN) node.
H3: The core network (CN) node sends a RAB assignment request message (RAB Assignment Request) of the Iu interface, where the message carries a new RAB parameter such as rate, to the AG.
H4: The AG sends a RAB assignment request message (RAB Assignment Request) of the Iuh interface to the target AP.
H5: The target AP completes the reconfiguration according to the new RAB parameter, and then sends a RAB assignment response message (RAB Assignment Response) of the Iuh interface to the AG.
H6: The AG sends a RAB assignment response message (RAB Assignment Response) of the Iu interface to the core network (CN) node, so as to complete the modification of the service.
Manner 2: The target access point returns a handover failure message to the access gateway, the access gateway sends a handover request to the core network, and the core network performs the handover control.

Specifically, the AG receives a relocation failure message (Relocation Failure) of the Iuh interface from the target AP, initiates a relocation request message (Relocation Request) of the Iu interface to the core network (CN), and tries to complete the AP-AP handover process through the core network.

It can be understood that in the embodiment of the present invention, manner 1 and manner 2 may be freely chosen to complete the handover. For the purpose of not increasing the burden of the core network, manner 1 is preferably chosen to complete the handover.

In Embodiment 2 of the present invention, in a case that the target access point does not support the capability of the source access point, two manners are given to implement the handover, which serves as a beneficial supplement of the method in Embodiment 1, so that the solution becomes more complete and is applicable to a more complex networking scenario.

Those of ordinary skill in the art should understand that all or a part of the steps in the method according to the embodiments may be implemented by a program instructing relevant hardware. The program may be stored in a computer readable storage medium. The storage medium may include such as a ROM, a RAM, a magnetic disk, and an optical disk.

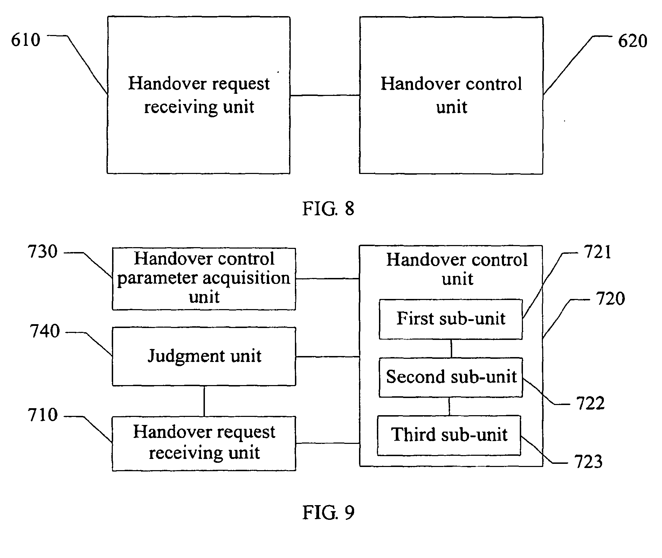

Embodiment 3: A handover control apparatus, where the apparatus may be an access gateway and a schematic structural diagram is as shown in FIG. 8, includes:
a handover request receiving unit 610, configured to receive a handover request message sent by a source access point of a user equipment, where the handover request message includes an identifier of a target access point; and
a handover control unit 620, configured to control, according to a pre-acquired handover control parameter, the handover of the user equipment from the source access point to the target access point.

Embodiment 4: A handover control apparatus, a schematic structural diagram of which is as shown in FIG. 9, includes:
a handover request receiving unit 710, configured to receive a handover request message sent by a source access point of a user equipment, where the handover request message includes an identifier of a target access point;
a handover control parameter acquisition unit 730, configured to acquire a handover control parameter for use by a handover control unit 720, where the handover control parameter includes a security mode parameter of the user equipment and a RAB parameter of the user equipment; and
a handover control unit 720, configured to control, according to the pre-acquired handover control parameter, the handover of the user equipment from the source access point to the target access point.

In specific implementation, the handover control unit 720 may specifically include:
a first sub-unit 721, configured to send a handover request message to the target access point, where the handover request message includes the pre-acquired handover control parameter;
a second sub-unit 722, configured to receive a message that network configuration is completed according to the pre-acquired handover control parameter, where the message is returned by the target access point, and then send an air interface reconfiguration message to the target access point; and
a third sub-unit 723, configured to receive an air interface reconfiguration complete message returned by the target access point, and set up a user plane bearer on which the user equipment receives or sends data through the target access point.

It can be understood that the handover control apparatus in the embodiment may further include:
a judgment unit 740, configured to judge whether the target access point is in a management range of the handover control apparatus.

If a judgment result of the judgment unit is no, the handover control unit 720 is further configured to send the handover request message to a core network, and the core network performs the handover control.

It can be understood that in this embodiment the judgment unit 740 may judge, according to the target access point identifier received by the handover request receiving unit 710, whether the target access point is in the management range of the handover control apparatus.

The handover control apparatuses provided in Embodiment 3 and Embodiment 4 may be integrated in an access gateway or a similar access control device to implement the handover control function.

It can be understood that the present invention further provides a handover control system, which includes the handover control apparatus in Embodiment 3 or 4, and a source access point and a target access point which communicate with the handover control apparatus.

Those of ordinary skill in the art should understand that all or a part of the steps in the embodiments may be implemented by a program instructing relevant hardware. The program may be stored in a computer readable storage medium. When the program is run, the steps of the method according to the embodiments are performed. The storage medium may be any medium that is capable of storing program codes, such as a ROM, a RAM, a magnetic disk, and an optical disk.

The handover control method, apparatus, and system according to the embodiments of the present invention are introduced in detail above. The principle and implementation of the present invention are described herein through specific examples. The illustration of the embodiments of the present invention is merely used to facilitate understanding of the method and core ideas of the present invention. Persons of ordinary skill in the art can make variations and modifications to the present invention according to the ideas of the present invention, in terms of the specific implementation and application scope. Therefore, the specification shall not be construed as a limitation on the present invention.

## Claims

1. A handover control method, comprising:
receiving (A1), by an access gateway (AG), a handover request message sent by a source access point of a user equipment (UE), wherein the handover request message comprises an identifier of a target access point; and
controlling (A2), by the access gateway (AG) according to a pre-acquired handover control parameter, _{CUE}) handover of the user equipment (UE) from the source access point to the target access point.

2. The method according to claim 1, wherein the controlling, by the access gateway according to the pre-acquired handover control parameter, the handover of the user equipment from the source access point to the target access point comprises:
sending a handover request message to the target access point, wherein the handover request message comprises the pre-acquired handover control parameter;
receiving a message that network configuration is completed according to the handover control parameter, wherein the message is returned by the target access point, and sending an air interface reconfiguration message to the target access point; and
receiving an air interface reconfiguration complete message returned by the target access point, and setting up a user plane bearer on which the user equipment receives or sends data through the target access point.

3. The method according to claim 1, wherein the handover control parameter comprises a security mode parameter of the user equipment and a radio access bearer RAB parameter of the user equipment.

4. The method according to claim 3, wherein the security mode parameter of the user equipment is acquired by the access gateway in a process that a core network initiates a security mode.

5. The method according to claim 3, wherein the RAB parameter of the user equipment is acquired by the access gateway in a process that a core network initiates a RAB assignment process.

6. The method according to any one of claims 1 to 5, wherein after the receiving, by the access gateway, the handover request message sent by the source access point of the user equipment, the method further comprises:
determining whether the target access point is in a management range of the access gateway; and if the target access point is not in the management range of the access gateway, sending the handover request message to the core network, and performing, by the core network, the handover control.

7. The method according to any one of claims 1 to 5, wherein after the target access point receives the handover request message, if the target access point does not support the capability of the source access point, the target access point sets up, according to the capability of the target access point, a service bearer supported by the target access point, and after the handover is successful, initiates modification of the service bearer on a core network side, or releases a service that is not support by the target access point.

8. The method according to any one of claims 1 to 5, wherein if the target access point returns a handover failure message to the access gateway, the access gateway sends a handover request to the core network, wherein the handover request message enables the core network to perform the handover control.

9. A handover control apparatus, wherein the handover control apparatus is an access gateway (AG), and comprises:
a handover request receiving unit (610), configured to receive a handover request message sent by a source access point of a user equipment (UE), wherein the handover request message comprises an identifier of a target access point; and
a handover control unit (620), configured to control, according to a pre-acquired handover control parameter, handover of the user equipment (UE) from the source access point to the target access point.

10. The handover control apparatus according to claim 9, wherein the handover control unit comprises:
a first sub-unit, configured to send a handover request message to the target access point, wherein the handover request message comprises the pre-acquired handover control parameter;
a second sub-unit, configured to receive a message that network configuration is completed according to the handover control parameter, wherein the message is returned by the target access point, and then send an air interface reconfiguration message to the target access point; and
a third sub-unit, configured to receive an air interface reconfiguration complete message returned by the target access point, and set up a user plane bearer on which the user equipment receives or sends data through the target access point.

11. The handover control apparatus according to claim 9, further comprising:
a handover control parameter acquisition unit, configured to acquire the handover control parameter for the handover control unit to use, wherein the handover control parameter comprises a security mode parameter of the user equipment and a RAB parameter of the user equipment.

12. The handover control apparatus according to any one of claims 9 to 11, further comprising:
a judgment unit, configured to judge whether the target access point is in a management range of the access gateway; and
if a judgment result of the judgment unit is no, the handover control unit is further configured to send the handover request message to a core network, wherein the handover request message enables the core network to perform the handover control.

13. The handover control apparatus according to any one of claims 9 to 12, wherein the access point is a femtocell.

14. The handover control apparatus according to any one of claims 9 to 13, wherein the access gateway is an access gateway managing the access point.

15. A handover control system, comprising a handover control apparatus according to any one of claims 9 to 14, and a source access point and a target access point which communicate with the handover control apparatus.

## Patentansprüche

1. Verbindungsübergabesteuerverfahren, das Folgendes umfasst:
Empfangen (A1) durch ein Zugangs-Gateway (AG) einer von einem Quell-Zugangspunkt eines Anwendergeräts (UE) gesendeten Verbindungsübergabe-Anforderungsnachricht, wobei die Verbindungsübergabe-Anforderungsnachricht einen Identifizierer eines Ziel-Zugangspunkts umfasst; und
Steuern (A2) durch das Zugangs-Gateway (AG) in Übereinstimmung mit einem im Voraus erfassten Verbindungsübergabesteuerparameter der Verbindungsübergabe des Anwendergeräts (UE) von dem Quell-Zugangspunkt zu dem Ziel-Zugangspunkt.

2. Verfahren nach Anspruch 1, wobei das Steuern durch das Zugangs-Gateway in Übereinstimmung mit dem im Voraus erfassten Verbindungsübergabesteuerparameter der Verbindungsübergabe des Anwendergeräts von dem Quell-Zugangspunkt zu dem Ziel-Zugangspunkt Folgendes umfasst:
Senden einer Verbindungsübergabe-Anforderungsnachricht an den Ziel-Zugangspunkt, wobei die Verbindungsübergabe-Anforderungsnachricht den im Voraus erfassten Verbindungsübergabesteuerparameter umfasst;
Empfangen einer Nachricht, dass die Netzkonfiguration in Übereinstimmung mit dem Verbindungsübergabesteuerparameter abgeschlossen ist, wobei die Nachricht durch den Ziel-Zugangspunkt zurückgeschickt wird, und Senden einer Luftschnittstellenumkonfigurationsnachricht an den Ziel-Zugangspunkt; und
Empfangen einer durch den Ziel-Zugangspunkt zurückgeschickten Luftschnittstellenumkonfigurationsabschlussnachricht und Aufbauen eines Anwenderebenen-Trägers, auf dem das Anwendergerät Daten durch den Ziel-Zugangspunkt empfängt oder sendet.

3. Verfahren nach Anspruch 1, wobei der Verbindungsübergabesteuerparameter einen Sicherheitsbetriebsart-Parameter des Anwenderendgeräts und einen Funkzugangsträger-Parameter, RAB-Parameter, des Anwendergeräts umfasst.

4. Verfahren nach Anspruch 3, wobei der Sicherheitsbetriebsart-Parameter des Anwendergeräts durch das Zugangs-Gateway in einem Prozess erfasst wird, bei dem ein Kernnetz eine Sicherheitsbetriebsart einleitet.

5. Verfahren nach Anspruch 3, wobei der RAB-Parameter des Anwendergeräts durch das Zugangs-Gateway in einem Prozess erfasst wird, bei dem ein Kernnetz einen RAB-Zuweisungsprozess einleitet.

6. Verfahren nach einem der Ansprüche 1 bis 5, wobei nach dem Empfangen durch das Zugangs-Gateway der durch den Quell-Zugangspunkt des Anwendergeräts gesendeten Verbindungsübergabe-Anforderungsnachricht das Verfahren ferner Folgendes umfasst:
Bestimmen, ob der Ziel-Zugangspunkt in einem Managementbereich des Zugangs-Gateways liegt; und, falls der Ziel-Zugangspunkt nicht in dem Managementbereich des Zugangs-Gateways liegt, Senden der Verbindungsübergabe-Anforderungsnachricht an das Kernnetz und Ausführen der Verbindungsübergabesteuerung durch das Kernnetz.

7. Verfahren nach einem der Ansprüche 1 bis 5, wobei der Ziel-Zugangspunkt, nachdem der Ziel-Zugangspunkt die Verbindungsübergabe-Anforderungsnachricht empfangen hat, falls der Ziel-Zugangspunkt die Fähigkeit des Quell-Zugangspunkts nicht unterstützt, in Übereinstimmung mit der Fähigkeit des Ziel-Zugangspunkts einen durch den Ziel-Zugangspunkt unterstützten Dienstträger aufbaut und, nachdem die Verbindungsübergabe erfolgreich ist, die Modifikation des Dienstträgers auf einer Kernnetz-Seite einleitet oder einen Dienst freigibt, der durch den Ziel-Zugangspunkt nicht unterstützt wird.

8. Verfahren nach einem der Ansprüche 1 bis 5, wobei, falls der Ziel-Zugangspunkt eine Verbindungsübergabe-Ausfallnachricht an das Zugangs-Gateway zurückschickt, das Zugangs-Gateway eine Verbindungsübergabe-Anforderung an das Kernnetz sendet, wobei die Verbindungsübergabe-Anforderungsnachricht es dem Kernnetz ermöglicht, die Verbindungsübergabesteuerung auszuführen.

9. Verbindungsübergabesteuervorrichtung, wobei die Verbindungsübergabesteuervorrichtung ein Zugangs-Gateway (AG) ist und Folgendes umfasst:
eine Verbindungsübergabeanforderungs-Empfangseinheit (610), die konfiguriert ist,
eine von einem Quell-Zugangspunkt eines Anwendergeräts (UE) gesendete Verbindungsübergabe-Anforderungsnachricht zu empfangen, wobei die Verbindungsübergabe-Anforderungsnachricht einen Identifizierer eines Ziel-Zugangspunkts umfasst; und
eine Verbindungsübergabesteuereinheit (620), die konfiguriert ist, in Übereinstimmung mit einem im Voraus erfassten Verbindungsübergabesteuerparameter die Verbindungsübergabe des Anwendergeräts (UE) von dem Quell-Zugangspunkt zu dem Ziel-Zugangspunkt zu steuern.

10. Verbindungsübergabesteuervorrichtung nach Anspruch 9, wobei die Verbindungsübergabesteuereinheit Folgendes umfasst:
eine erste Untereinheit, die konfiguriert ist, eine Verbindungsübergabe-Anforderungsnachricht an den Ziel-Zugangspunkt zu senden, wobei die Verbindungsübergabe-Anforderungsnachricht den im Voraus erfassten Verbindungsübergabesteuerparameter umfasst;
eine zweite Untereinheit, die konfiguriert ist, eine Nachricht zu empfangen, dass die Netzkonfiguration in Übereinstimmung mit dem Verbindungsübergabesteuerparameter abgeschlossen ist, wobei die Nachricht durch den Ziel-Zugangspunkt zurückgeschickt wird, und dann eine Luftschnittstellenumkonfigurationsnachricht an den Ziel-Zugangspunkt zu senden; und
eine dritte Untereinheit, die konfiguriert ist, eine durch den Ziel-Zugangspunkt zurückgeschickte Luftschnittstellenumkonfigurationsabschlussnachricht zu empfangen und einen Anwenderebenen-Träger, auf dem das Anwendergerät Daten durch den Ziel-Zugangspunkt empfängt oder sendet, aufzubauen.

11. Verbindungsübergabesteuervorrichtung nach Anspruch 9, die ferner Folgendes umfasst:
eine Verbindungsübergabesteuerparameter-Erfassungseinheit, die konfiguriert ist, den Verbindungsübergabesteuerparameter für die Verbindungsübergabesteuereinheit zur Verwendung zu erfassen, wobei der Verbindungsübergabesteuerparameter einen Sicherheitsbetriebsart-Parameter des Anwendergeräts und einen RAB-Parameter des Anwendergeräts umfasst.

12. Verbindungsübergabesteuervorrichtung nach einem der Ansprüche 9 bis 11, die ferner Folgendes umfasst:
eine Beurteilungseinheit, die konfiguriert ist, zu beurteilen, ob der Ziel-Zugangspunkt in einem Managementbereich des Zugangs-Gateways liegt; wobei falls ein Beurteilungsergebnis der Beurteilungseinheit nein lautet, die Verbindungsübergabesteuereinheit ferner konfiguriert ist, die Verbindungsübergabe-Anforderungsnachricht an ein Kernnetz zu senden, wobei die Verbindungsübergabe-Anforderungsnachricht es dem Kernnetz ermöglicht, die Verbindungsübergabesteuerung auszuführen.

13. Verbindungsübergabesteuervorrichtung nach einem der Ansprüche 9 bis 12, wobei der Zugangspunkt eine Femtozelle ist.

14. Verbindungsübergabesteuervorrichtung nach einem der Ansprüche 9 bis 13, wobei der Zugangspunkt ein Zugangs-Gateway ist, das den Zugangspunkt managt.

15. Verbindungsübergabesteuersystem, das eine Verbindungsübergabesteuervorrichtung nach einem der Ansprüche 9 bis 14 und einen Quell-Zugangspunkt und einen Ziel-Zugangspunkt, die mit der Verbindungsübergabesteuervorrichtung kommunizieren, umfasst.

## Revendications

1. Procédé de commande de transfert, comprenant :
la réception (A1), par une passerelle d'accès (AG), d'un message de requête de transfert envoyé par un point d'accès source d'un équipement utilisateur (UE), le message de requête de transfert comprenant un identifiant d'un point d'accès cible ; et
la commande (A2), par la passerelle d'accès (AG) en fonction d'un paramètre de commande de transfert préacquis, du transfert de l'équipement utilisateur (UE) du point d'accès source au point d'accès cible.

2. Procédé selon la revendication 1, dans lequel la commande, par la passerelle d'accès en fonction du paramètre de commande de transfert préacquis, du transfert de l'équipement utilisateur du point d'accès source au point d'accès cible comprend :
l'envoi d'un message de requête de transfert au point d'accès cible, le message de requête de transfert comprenant le paramètre de commande de transfert préacquis ;
la réception d'un message que la configuration de réseau est terminée en fonction du paramètre de commande de transfert, le message étant renvoyé par le point d'accès cible, et l'envoi d'un message de reconfiguration d'interface radio au point d'accès cible ; et
la réception d'un message de reconfiguration d'interface radio terminée renvoyé par le point d'accès cible, et l'établissement d'un support de plan utilisateur sur lequel l'équipement utilisateur reçoit ou envoie des données par le biais du point d'accès cible.

3. Procédé selon la revendication 1, dans lequel le paramètre de commande de transfert comprend un paramètre de mode de sécurité de l'équipement utilisateur et un paramètre de support d'accès radio RAB de l'équipement utilisateur.

4. Procédé selon la revendication 3, dans lequel le paramètre de mode de sécurité de l'équipement utilisateur est acquis par la passerelle d'accès dans un processus selon lequel un réseau coeur lance un mode de sécurité.

5. Procédé selon la revendication 3, dans lequel le paramètre RAB de l'équipement utilisateur est acquis par la passerelle d'accès dans un processus selon lequel un réseau coeur lance un processus d'allocation de RAB.

6. Procédé selon l'une quelconque des revendications 1 à 5, comprenant en outre après la réception, par la passerelle d'accès, du message de requête de transfert envoyé par le point d'accès source de l'équipement utilisateur :
la détermination que le point d'accès cible se trouve ou non dans une portée de gestion de la passerelle d'accès ;
et si le point d'accès cible ne se trouve pas dans la portée de gestion de la passerelle d'accès, l'envoi du message de requête de transfert au réseau coeur, et l'exécution, par le réseau coeur, de la commande de transfert.

7. Procédé selon l'une quelconque des revendications 1 à 5, dans lequel après que le point d'accès cible reçoit le message de requête de transfert, si le point d'accès cible ne supporte pas la capabilité du point d'accès source, le point d'accès cible établit, en fonction de la capabilité du point d'accès cible, un support de service supporté par le point d'accès cible, et après la réussite du transfert, lance la modification du support de service sur un côté du réseau coeur, ou libère un service qui n'est pas supporté par le point d'accès cible.

8. Procédé selon l'une quelconque des revendications 1 à 5, dans lequel si le point d'accès cible renvoie un message d'échec de transfert à la passerelle d'accès, la passerelle d'accès envoie une requête de transfert au réseau coeur, le message de requête de transfert permettant au réseau coeur d'effectuer la commande de transfert.

9. Appareil de commande de transfert, l'appareil de commande de transfert étant une passerelle d'accès (AG), et comprenant :
une unité de réception de requête de transfert (610), configurée pour recevoir un message de requête de transfert envoyé par un point d'accès source d'un équipement utilisateur (UE), le message de requête de transfert comprenant un identifiant d'un point d'accès cible ; et
une unité de commande de transfert (620), configurée pour commander, en fonction d'un paramètre de commande de transfert préacquis, un transfert de l'équipement utilisateur (UE) du point d'accès source au point d'accès cible.

10. Appareil de commande de transfert selon la revendication 9, dans lequel l'unité de commande de transfert comprend :
une première sous-unité, configurée pour envoyer un message de requête de transfert au point d'accès cible, le message de requête de transfert comprenant le paramètre de commande de transfert préacquis ;
une deuxième sous-unité, configurée pour recevoir un message indiquant que la configuration de réseau est terminée en fonction du paramètre de commande de transfert, le message étant renvoyé par le point d'accès cible, puis envoyer un message de reconfiguration d'interface radio au point d'accès cible ; et
une troisième sous-unité, configurée pour recevoir un message de reconfiguration d'interface radio terminée renvoyé par le point d'accès cible, et établir un support de plan utilisateur sur lequel l'équipement utilisateur reçoit ou envoie des données par le biais du point d'accès cible.

11. Appareil de commande de transfert selon la revendication 9, comprenant en outre :
une unité d'acquisition de paramètre de commande de transfert, configurée pour acquérir le paramètre de commande de transfert que l'unité de commande de transfert doit utiliser, le paramètre de commande de transfert comprenant un paramètre de mode de sécurité de l'équipement utilisateur et un paramètre RAB de l'équipement utilisateur.

12. Appareil de commande de transfert selon l'une quelconque des revendications 9 à 11, comprenant en outre :
une unité de jugement, configurée pour juger si le point d'accès cible est ou non dans une portée de gestion de la passerelle d'accès ; et
si un résultat de jugement de l'unité de jugement est non, l'unité de commande de transfert est configurée en outre pour envoyer le message de requête de transfert à un réseau coeur, le message de requête de transfert permettant au réseau coeur d'exécuter la commande de transfert.

13. Appareil de commande de transfert selon l'une quelconque des revendications 9 à 12, dans lequel le point d'accès est une femtocellule.

14. Appareil de commande de transfert selon l'une quelconque des revendications 9 à 13, dans lequel la passerelle d'accès est une passerelle d'accès gérant le point d'accès.

15. Système de commande de transfert, comprenant un appareil de commande de transfert selon l'une quelconque des revendications 9 à 14, et un point d'accès source et un point d'accès cible qui communiquent avec l'appareil de commande de transfert.
